# EUROPÄISCHE PATENTSCHRIFT

(11) **EP 4 099 969 B1**
(45) Veröffentlichungstag und Bekanntmachung des Hinweises auf die Patenterteilung: **03.01.2024**
(21) Anmeldenummer: 21711724.1
(22) Anmeldetag: 02.02.2021
(51) Int. Cl.: B60B 3/18, B60B 25/02, A61G 5/10, A61G 7/10

(54) **ROLLSTUHLRAD**
WHEELCHAIR WHEEL
ROUE DE FAUTEUIL ROULANT

(30) Priorität: 07.02.2020 DE 102020103171
(43) Veröffentlichungstag der Anmeldung: 14.12.2022
(73) Patentinhaber: P + L Innovations GmbH, 79189 Bad Krozingen (DE)
(72) Erfinder: EICH, Michael, 79111 Freiburg (DE); PFLAUMBAUM, Wolf-Dietrich, 79189 Bad Krozingen (DE)
(74) Vertreter: Geitz Patentanwälte PartG mbB
(86) Internationale Anmeldenummer: PCT/DE2021/100097
(87) Internationale Veröffentlichungsnummer: WO 2021/155886

(56) Entgegenhaltungen:
- EP-A1- 3 222 263
- WO-A1-95/03183
- WO-A1-97/45275
- FR-A- 1 504 043
- US-A- 1 236 921
- US-A- 3 106 951
- US-A1- 2009 139 116
- US-B1- 6 364 424

## Beschreibung

Die Erfindung geht aus von einem Rollstuhlrad mit einer Nabe und einem an der Nabe angeordneten Radkörper, der eine Lauffläche des Rollstuhlrades bildet und die Verbindung zwischen der Nabe und der Lauffläche darstellt.

Rollstühle dienen Menschen, die in ihrer Fähigkeit zu gehen eingeschränkt sind. Typischerweise weist ein Rollstuhl einen Rollstuhlrahmen auf, an welchem ein Sitz, zwei große als Laufräder ausgebildete Rollstuhlräder und zwei wesentlich kleinere Vorderräder angeordnet sind. Jedes Rollstuhlrad weist eine Nabe auf, die relativ zu einer Radachse drehbar ist. Das Rollstuhlrad ist mit der Radachse am Rollstuhlrahmen drehbar angeordnet.

Aus dem Stand der Technik der EP 3 222 263 A1 ist ein Rollstuhlrad bekannt, welches eine Nabe und einen in drei gleich große Sektoren unterteilten Radkörper aufweist. Die drei Radkörpersektoren sind mittels eines Drehknopfs lösbar an der Nabe befestigt. Um einer im Gehen eingeschränkten Person den Übergang vom Sitz des Rollstuhls zu einer Toilette, einem Stuhl oder einem Bett zu erleichtern, kann ein oberer der drei Radkörpersektoren des Rollstuhlrades von der Nabe gelöst werden. Die beiden anderen Radkörpersektoren sollen an der Nabe und damit am Rollstuhl verbleiben. Alle drei Radkörpersektoren sind über eine einzige Befestigungseinrichtung an der Nabe gehalten. Zum Lösen eines Radkörpersektors muss der Drehknopf der Befestigungseinrichtung in eine bestimmte Stellung gebracht werden, die den nach oben weisenden Radkörpersektor frei gibt. Dies ist für die im Rollstuhl sitzende Person erschwert, da der seitlich am Rollstuhl befindliche Drehknopf für sie nur von oben einsehbar ist. Entsprechendes gilt für den anschließenden erneuten Einbau des Radkörpersektors am Rollstuhlrad, da für den Einbau des Radkörpersektors der Drehknopf in dieselbe Ausrichtung gedreht werden muss wie für den Ausbau. Ferner birgt die für alle drei Radkörpersektoren gemeinsame Befestigungseinrichtung die Gefahr, dass sich nicht der nach oben weisende Radkörpersektor von der Nabe löst, sondern in unerwünschter Weise einer der beiden anderen Radkörpersektoren. In diesem Fall kann der Rollstuhl kippen.

Aus der US 6 364 424 B1 ist eine Radbaugruppe zur Verwendung bei Fahrrädern und anderen Fahrzeugen bekannt, welche zerlegt und in einer kompakten Anordnung leicht getragen und aufbewahrt werden können. Die Radbaugruppe umfasst eine zentral positionierte Nabe und mehrere tortenstückförmige Radsegmente, die entlang ihrer radialen Seitenkanten miteinander verbunden werden. Die Radsegmente bilden eine kreisförmige Scheibe mit einer zentralen Öffnung für die Nabe. Jedes Radsegment ist an seinem inneren radialen Rand lösbar an die Nabe gekoppelt. An seinem äußeren radialen Rand bildet jedes Radsegment einen Abschnitt einer kreisförmigen Felge. An der Felge kann ein Reifen angeordnet werden. Der Reifen umfasst einen nicht pneumatischen Reifen mit einer ringförmigen Rippe, die an die Felge gekoppelt wird. Zum Zusammenbau des Rades werden zunächst die Radsegmente miteinander verbunden und anschließend die dabei gebildete Scheibe an der Nabe angeordnet. Wenn die Scheibensegmente mit der Nabe verbunden sind, wird der Reifen auf der Felge montiert.

Aus der US 2009/139116 A1 ist eine Radbaugruppe bekannt. Diese umfasst ein erstes und ein zweites Radstück, die aneinander befestigt werden. Das erste und das zweite Radstück weisen erste und zweite Felgenabschnitte auf. Das erste und das zweite Radstück werden in einer axialen Richtung, die parallel zu einer Drehachse der Radbaugruppe ist, gleitend in Eingriff gebracht. Das Lösen erfolgt in die entgegengesetzte Richtung.

Der Erfindung liegt die Aufgabe zugrunde, ein Rollstuhlrad mit drei Radkörpersektoren zur Verfügung zu stellen, bei dem die Gefahr eines unerwünschten Lösens eines oder mehrerer Radkörpersektoren reduziert ist und bei dem das gezielte Lösen einzelner Radkörpersektoren auch für eine beim Gehen eingeschränkte Person erleichtert ist.

Die Aufgabe wird durch ein Rollstuhlrad mit den Merkmalen des Anspruchs 1 gelöst. Das Rollstuhlrad zeichnet sich dadurch aus, dass es mit drei voneinander unabhängigen Befestigungseinrichtungen ausgestattet ist. Dabei ist jeder der drei Radkörpersektoren mit einer der drei Befestigungseinrichtungen lösbar an der Nabe befestigt. Durch das Lösen einer der drei Befestigungseinrichtungen kann damit auch nur derjenige Radkörpersektor von der Nabe entfernt werden, der mit genau dieser Befestigungseinrichtung fixiert ist. Die beiden anderen Befestigungseinrichtungen werden hierdurch nicht beeinflusst, so dass die mit ihnen an der Nabe befestigten Radkörpersektoren in zuverlässiger Weise an der Nabe fixiert bleiben.

Da für jeden Radkörpersektor genau eine Befestigungseinrichtung vorgesehen ist, welche von den beiden anderen Befestigungseinrichtungen unabhängig ist, ist für den Benutzer die Zuordnung zwischen einem der Radkörpersektoren, den er entfernen möchte, und der zugehörigen Befestigungseinrichtung erleichtert.

Zum Ausbau eines Radkörpersektors aus dem Rollstuhlrad wird die Befestigungseinrichtung, mit der dieser Radkörpersektor an der Nabe befestigt ist, gelöst. Hierzu ist die Befestigungseinrichtung bevorzugt mit einem manuell zu betätigenden Griffteil ausgestattet. Durch Betätigung dieses Griffteils wird die Fixierung des Radkörpersektors an der Nabe aufgehoben, so dass der Radkörpersektor von der Nabe und den beiden anderen Radkörpersektoren abgenommen werden kann. Der Benutzer muss lediglich den Radkörpersektor auswählen, den er lösen möchte. Für eine im Rollstuhl sitzende Person, die einen Transfer auf eine andere Sitzgelegenheit anstrebt, ist der ausgewählte Radkörpersektor bevorzugt an dem der Sitzgelegenheit zugewandten Rollstuhlrad derart ausgerichtet, dass er nach oben weist. Der Rollstuhl kann in der von der Person hierzu eingestellten Position arretiert werden, so dass er nicht unerwünscht wegrollt und der ausgewählte Radkörpersektor damit in der eingestellten Ausrichtung bleibt. Zum Lösen des ausgewählten Radkörpersektors betätigt die Person die zu dem Radkörpersektor gehörende Befestigungseinrichtung. Ein ihr zugeordnetes Griffteil befindet sich bevorzugt an der Außenseite des Rollstuhlrads im Bereich des ausgewählten Radkörpersektors. Die Zuordnung zwischen einem Radkörpersektor und der Befestigungseinrichtung, mit der dieser Radkörpersektor an der Nabe befestigt ist, ist damit klar und eindeutig. Dadurch ist das Lösen des ausgewählten Radkörpersektors mit der betreffenden Befestigungseinrichtung klar und eindeutig, auch wenn der Benutzer das Rollstuhlrad im wesentlichen nur von oben einsehen kann.

Auch der Einbau eines Radkörpersektors in das Rollstuhlrad ist schnell und einfach möglich. Hierzu wird der Radkörpersektor in den am Rollstuhlrad für ihn vorgesehenen Zwischenraum eingeführt. Sobald der Radkörpersektor an der Nabe positioniert ist, wird er mittels der Befestigungseinrichtung, welche an der Nabe in dem für den Radkörpersektor vorgesehenen Bereich angeordnet ist, fixiert.

Zum Transport oder zur Lagerung des Rollstuhls oder des Rollstuhlrades können auch alle drei Befestigungseinrichtungen gelöst und die zugehörigen Radkörpersektoren von der Nabe abgenommen werden.

Vorteilhafterweise sind die drei Radkörpersektoren und die drei Befestigungseinrichtungen baugleich. Dies führt dazu, dass jeder Radkörpersektor in jede Befestigungseinrichtung passt.

Nach einer vorteilhaften Ausgestaltung der Erfindung sind die drei Befestigungseinrichtungen an der Nabe in Bezug auf die Drehachse radial nach außen versetzt angeordnet. Vorteilhafterweise ist der Abstand zwischen der Drehachse und der Befestigungseinrichtung für alle drei Befestigungseinrichtungen gleich. Darüber hinaus beträgt der Winkel zwischen je zwei Befestigungseinrichtungen 120°. Dank der Anordnung der Befestigungseinrichtungen abseits der Drehachse des Rollstuhlrades wird die Zuordnung zwischen einem an der Nabe angeordneten Radkörpersektor und einer Befestigungseinrichtung zusätzlich erleichtert.

Nach einer vorteilhaften Ausgestaltung weist jede Befestigungseinrichtung ein manuell zu betätigendes Griffteil auf, mit dem die Befestigungseinrichtung von einer den Radkörpersektor an der Nabe fixierenden Schließstellung in eine den Radkörpersektor von der Nabe lösbaren Öffnungsstellung überführt werden kann. Dabei ist das Griffteil an einer Außenseite des Rollstuhlrades im Bereich desjenigen Radkörpersektors angeordnet, der mit der betreffenden Befestigungseinrichtung an der Nabe befestigt ist. Damit die Zuordnung zwischen einem Radkörpersektor und der Befestigungseinrichtung, mit der dieser Radkörpersektor an der Nabe befestigt ist, erleichtert ist und eine im Rollstuhl sitzende Person das Griffteil mit der Hand leicht erreichen kann, befindet sich das Griffteil sowohl in der Schließstellung als auch in der Öffnungsstellung nicht unmittelbar an der Drehachse des Rollstuhlrades oder benachbart zu dieser sondern radial nach außen versetzt mit einem Abstand zur Drehachse.

Nach einer weiteren vorteilhaften Ausgestaltung der Erfindung weist die Nabe einen kreiszylindrischen, in Bezug auf eine Drehachse des Rollstuhlrades rotationssymmetrischen Naben-Hohlkörper auf, welcher eine Radachse eines Rollstuhlrahmens aufnimmt.

Nach einer weiteren vorteilhaften Ausgestaltung der Erfindung weist die Nabe an ihrer Außenseite eine als umlaufende Ringnut ausgebildete Radkörpersektoraufnahme auf, in welcher die Radsektoren mit einem der Nabe zugewandten Befestigungsabschnitt aufgenommen sind. Mittels dieser Radkörpersektoraufnahme werden die Radkörpersektoren an der Nabe positioniert und relativ zur Nabe ausgerichtet. Die Radkörpersektoraufnahme ist darüber hinaus in der Lage, in axialer Richtung auf das Rollstuhlrad und die Radkörpersektoren wirkende Kräfte aufzunehmen. Sie kann ferner ausgebildet sein, um die Radkörpersektoren mittels der Befestigungseinrichtungen an der Nabe einzuspannen oder festzuklemmen.

Nach einer weiteren vorteilhaften Ausgestaltung der Erfindung ist die Radkörpersektoraufnahme durch zwei im wesentlichen zueinander parallele, radial nach außen abstehende, ringförmige Nabenscheiben gebildet. Diese beiden ringförmigen Nabenscheiben weisen in axialer Richtung bezogen auf die Drehachse des Rollstuhlrades einen Abstand zueinander auf, der im wesentlichen der Dicke des Befestigungsabschnitts der Radkörpersektoren entspricht. Dabei wird die Dicke des Befestigungsabschnitts der Radkörpersektoren ebenfalls in axialer Richtung der Drehachse bestimmt.

Nach einer weiteren vorteilhaften Ausgestaltung der Erfindung ist jeder Radkörpersektor an seinen beiden den benachbarten Radkörpersektoren zugewandten Stirnseiten zumindest abschnittsweise mit einem Profil ausgestattet. Dabei greifen die Profile benachbarter, an der Nabe befestigter Radkörpersektoren ineinander. Dank dieser ineinander greifender Profile werden die Radkörpersektoren bei in axialer Richtung auf das Rollstuhlrad wirkenden Kräften in Position gehalten und können sich nicht relativ zueinander verschieben. Jeder an der Nabe befestigter Radkörpersektor stützt sich damit an der Radkörpersektoraufnahme sowie an den beiden ihm benachbarten Radkörpersektoren ab.

Nach einer weiteren vorteilhaften Ausgestaltung der Erfindung ist das Profil an der einen Stirnseite jedes Radkörpersektors als Nut und an der anderen Stirnseite des Radkörpersektors als Feder ausgebildet. Die an der Nabe befestigten Radkörpersektoren bilden untereinander eine Nut-Feder-Verbindung aus.

Nach einer weiteren vorteilhaften Ausgestaltung der Erfindung bilden die Reifenabschnitte aller Radkörpersektoren einen zusammenhängenden Reifen mit einer im wesentlichen umfangsseitig geschlossenen Lauffläche. Es verbleiben allenfalls kleinste Zwischenräume oder Schlitze zwischen den Reifenabschnitten benachbarter Radkörpersektoren.

Nach einer weiteren vorteilhaften Ausgestaltung der Erfindung ist jeder Radkörpersektor mit einem Greifringabschnitt ausgestattet. Dabei bilden die Greifringabschnitte aller an der Nabe befestigten Radkörpersektoren einen umlaufenden, geschlossenen Greifring des Rollstuhlrades. Der Greifring wird auch als Greifreifen bezeichnet. Er dient einem Rollstuhlfahrer dazu, die Rollstuhlräder von Hand zur Rotation anzutreiben oder abzubremsen. Hierzu greift er mit der Hand an dem Greifring an. Der Greifring ist typischerweise an dem Rollstuhlrad in der Nähe des Felgenprofils angeordnet.

Nach einer weiteren vorteilhaften Ausgestaltung der Erfindung greifen die Greifringabschnitte je zweier benachbart an der Nabe befestigter Radkörpersektoren ineinander, so dass der Übergang von dem Greifringabschnitt eines Radkörpersektors auf den Greifringabschnitt des benachbarten Radkörpersektors des Rollstuhlrades kantenfrei ist und eine Verletzung des Hand des Rollstuhlfahrers ausgeschlossen werden kann, wenn dieser den Rollstuhl unter Ausnutzung des Greifrings antreibt oder abbremst.

Nach einer weiteren vorteilhaften Ausgestaltung der Erfindung sind die drei Befestigungseinrichtungen baugleich.

Nach einer weiteren vorteilhaften Ausgestaltung der Erfindung sind die Befestigungseinrichtungen als Spanneinrichtung ausgebildet, welche die Radkörpersektoren an der Nabe festspannen.

Nach einer weiteren vorteilhaften Ausgestaltung der Erfindung ist die Befestigungseinrichtung mit einem Exzenterspanner ausgestattet.

Nach einer weiteren vorteilhaften Ausgestaltung der Erfindung ist der Exzenterspanner selbsthemmend. Ein unerwünschtes Lösen der Befestigungseinrichtung aufgrund von Erschütterungen ist dadurch ausgeschlossen. Damit ist die sichere Befestigung der Radkörpersektoren an der Nabe gewährleistet.

Nach einer weiteren vorteilhaften Ausgestaltung der Erfindung weist der Exzenterspanner einen Spannhebel auf, der um eine relativ zur Nabe feststehende Spannachse drehbar ist. Der Spannhebel ist mit dem Griffteil der Befestigungseinrichtung und mit einem eine Spannkurve aufweisenden Spannteil ausgestattet. Der Mittelpunkt der Spannkurve liegt außermittig zur Spannachse des Spannhebels.

Nach einer weiteren vorteilhaften Ausgestaltung der Erfindung verläuft die Spannachse der Befestigungseinrichtungen senkrecht zur Drehachse des Rollstuhlrades. Die Spannachse schneidet die Drehachse des Rollstuhlrades nicht. Streng genommen schneidet eine zu der Spannachse parallele Gerade die Drehachse des Rollstuhlrades senkrecht. Bei der Drehachse des Rollstuhlrades und bei der Spannachse der Befestigungseinrichtungen handelt es sich jeweils um Geraden. In bevorzugter Weise liegen die Spannachsen der drei Befestigungseinrichtungen in einer Ebene. Diese Ebene steht senkrecht auf der Drehachse des Rollstuhlrades.

Nach einer weiteren vorteilhaften Ausgestaltung der Erfindung weist das Spannteil in einer Öffnungsstellung der Befestigungseinrichtung einen Abstand zu einem an der Nabe angeordneten Radkörpersektor auf oder liegt kraftlos an diesem an. In einer Schließstellung der Befestigungseinrichtung drückt das Spannteil mit einer durch die Spannkurve vorgegebenen Kraft gegen einen an der Nabe angeordneten Radkörpersektor.

Nach einer weiteren vorteilhaften Ausgestaltung der Erfindung ist an der Nabe ein Gegenlager angeordnet, welches in Schließstellung des Spannteils mit dem Spannteil zusammenwirkt. Ein Radkörpersektor ist in Schließstellung der Befestigungseinrichtung zwischen dem Spannteil und dem Gegenlager eingespannt.

Nach einer weiteren vorteilhaften Ausgestaltung der Erfindung ist das Gegenlager durch eine der beiden ringförmigen Nabenscheiben der Radkörpersektoraufnahme gebildet. Das Spannteil des Exzenterspanners drückt einen mit der Befestigungseinrichtung an der Nabe befestigten Radkörpersektor gegen die betreffende Nabenscheibe. Die Nabenscheibe bildet damit für alle drei Befestigungseinrichtungen das Gegenlager zu dem Exzenterspanner. Die Nabenscheibe bleibt beim Übergang der Befestigungseinrichtungen von der Schließstellung in die Öffnungsstellung und umgekehrt unverändert. Sie beeinflusst den Übergang von der Schließstellung in die Öffnungsstellung nicht. Daher sind die als Spanneinrichtungen ausgebildeten Befestigungseinrichtungen voneinander unabhängig, obwohl sie alle gegen dasselbe Gegenlager spannen.

Nach einer weiteren vorteilhaften Ausgestaltung der Erfindung weist jeder der Radkörpersektoren eine Vertiefung auf, in welcher das Spannteil in der Schließstellung der Befestigungseinrichtung zu liegen kommt. Durch die Vertiefung ist die Kraft erhöht, die notwendig ist, um die Befestigungseinrichtung von der Schließstellung in die Öffnungsstellung zu bewegen. Es wird vermieden, dass sich die Befestigungseinrichtung unerwünscht durch eine Erschütterung lösen kann.

Nach einer weiteren vorteilhaften Ausgestaltung der Erfindung ist das Griffteil ergonomisch geformt. Das Griffteil liegt gut in der Hand. Es kann auch durch Personen betätigt werden, die in ihrer Bewegungsfähigkeit eingeschränkt sind.

Nach einer weiteren vorteilhaften Ausgestaltung der Erfindung weist das Griffteil an einer ersten Seite mindestens eine Griffmulde für einen oder mehrere Finger auf. An einer der ersten Seite abgewandten zweiten Seite des Griffteils ist eine Auflagefläche für den Handballen einer Person vorgesehen. Um die Befestigungseinrichtung von einer Schließstellung in eine Öffnungsstellung zu bewegen, legt eine Person mindestens einen Finger in die Griffmulde und zieht an dem Griffteil. Auf die Auflagefläche für den Handballen kann die Person mit dem Handballen Druck ausüben und dadurch die Befestigungseinrichtung von der Öffnungsstellung in die Schließstellung bewegen. Es ist auch möglich, beim Übergang von der Öffnungsstellung in die Schließstellung an dem Griffteil zu ziehen und beim Übergang von der Schließstellung in die Öffnungsstellung auf das Griffteil zu drücken. Dies hängt davon ab, wie das Griffteil an der Befestigungseinrichtung angeordnet ist und wie der Benutzer relativ zu dem Rollstuhlrad und der betreffenden Befestigungseinrichtung positioniert ist.

Nach einer weiteren vorteilhaften Ausgestaltung der Erfindung liegt das Griffteil in der Schließstellung der Befestigungseinrichtung an dem Radkörpersektor, der mit dieser Befestigungseinrichtung an der Nabe befestigt ist, an. Der Radkörpersektor bildet einen Anschlag für die Schließstellung der Befestigungseinrichtung.

Nach einer weiteren vorteilhaften Ausgestaltung der Erfindung weist jede Befestigungseinrichtung einen an der Nabe angeordneten, parallel zur Drehachse des Rollstuhlrades verlaufenden, Steg auf. Jeder Radkörpersektor weist an seinem der Nabe zugewandten Befestigungsabschnitt eine Ausnehmung auf, in welcher der Steg beim Befestigen des Radkörpersektors an der Nabe zu liegen kommt. Der Steg sorgt dafür, dass ein an der Nabe angeordneter Radkörpersektor sind nicht in Drehrichtung des Rollstuhlrades relativ zur Nabe bewegen kann. Darüber hinaus ist durch den Steg an der Nabe und durch die Ausnehmung an den Radkörpersektoren die Position vorgegeben, an der ein Radkörpersektor an der Nabe angeordnet wird. Dies ist insbesondere dann von Bedeutung, wenn alle drei Radkörpersektoren von der Nabe entfernt sind und wieder eingebaut werden sollen. Der Steg kann an den beiden ringförmigen Naben-Scheiben befestigt sein.

Nach einer weiteren vorteilhaften Ausgestaltung der Erfindung ist der Spannhebel des Exzenterspanners an dem Steg drehbar angeordnet. Der Steg bildet damit einen Teil des Exzenterspanners, nämlich den relativ zur Nabe feststehenden Teil des Exzenterspanners.

Weitere Vorteile und vorteilhafte Ausgestaltungen der Erfindung sind der nachfolgenden Beschreibung, der Zeichnung und den Ansprüchen entnehmbar.

### Zeichnung

In der Zeichnung ist ein Ausführungsbeispiel eines erfindungsgemäßen Rollstuhlrades dargestellt. Es zeigen:
- Figur 1: Rollstuhlrad in einer Seitenansicht,
- Figur 2: Schnitt durch das Rollstuhlrad gemäß Figur 1 entlang der mit A - A in Figur 1 gekennzeichneten Ebene,
- Figur 3: Rollstuhlrad gemäß Figur 1, bei dem ein Radkörpersektor von der Nabe entfernt ist,
- Figur 4: Schnitt durch das Rollstuhlrad gemäß Figur 3 entlang der mit A - A in Figur 3 gekennzeichneten Ebene,
- Figur 5: Radkörpersektor des Rollstuhlrades gemäß Figur 1 in einer Aufsicht,
- Figur 6: Radkörpersektor gemäß Figur 5 in einer Ansicht von unten,
- Figur 7: Radkörpersektor gemäß Figur 5 in Seitenansicht,
- Figur 8: Schnitt durch den Radkörpersektor gemäß Figur 5 entlang der in Figur 5 mit A - A gekennzeichneten Ebene,
- Figur 9: Exzenterspanner einer Befestigungseinrichtung des Rollstuhlrades gemäß Figur 1 in einer Seitenansicht,
- Figur 10: Exzenterspanner gemäß Figur 9 in einer weiteren Seitenansicht,
- Figur 11: Exzenterspanner gemäß Figur 9 in einer Ansicht von unten.

### Beschreibung des Ausführungsbeispiels

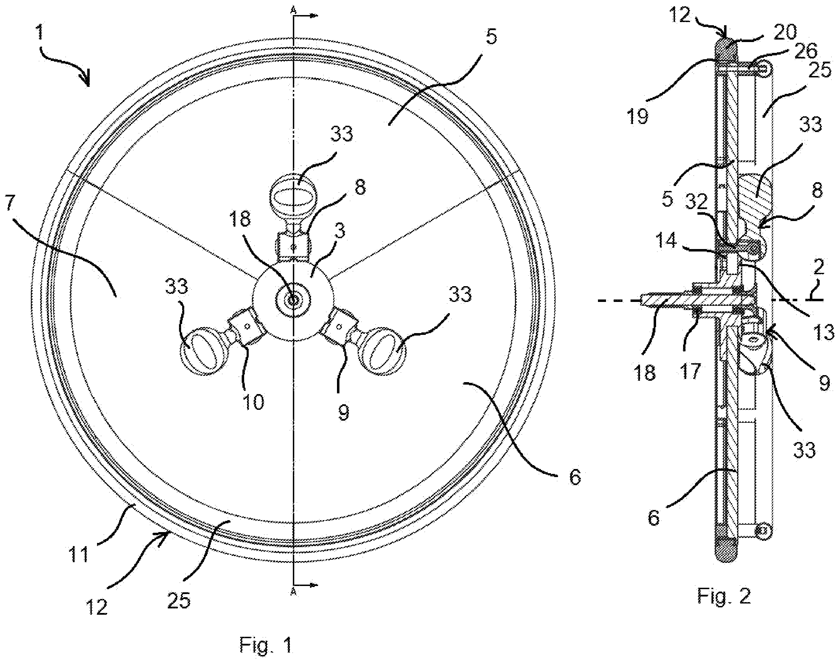

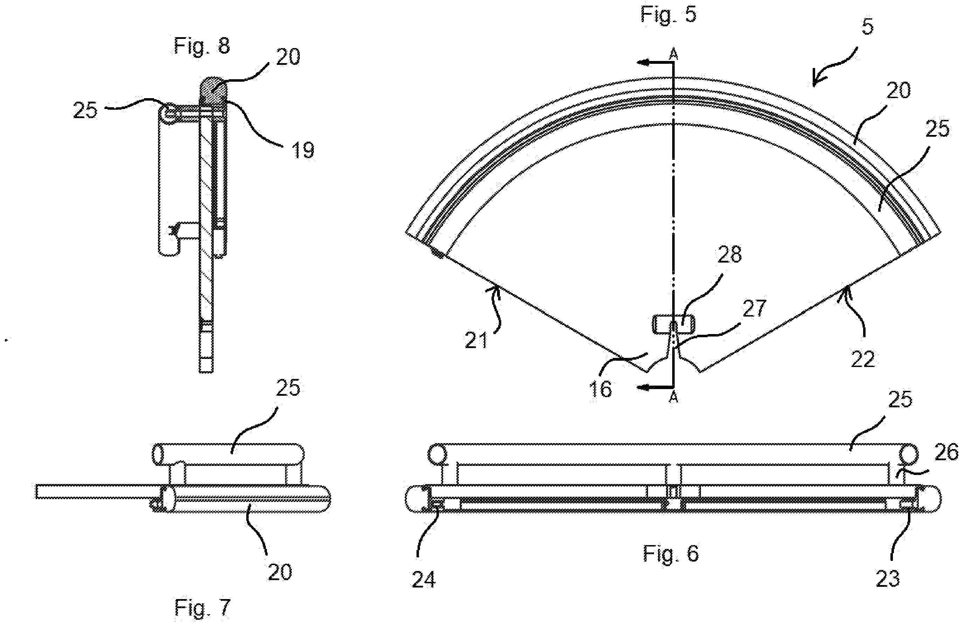

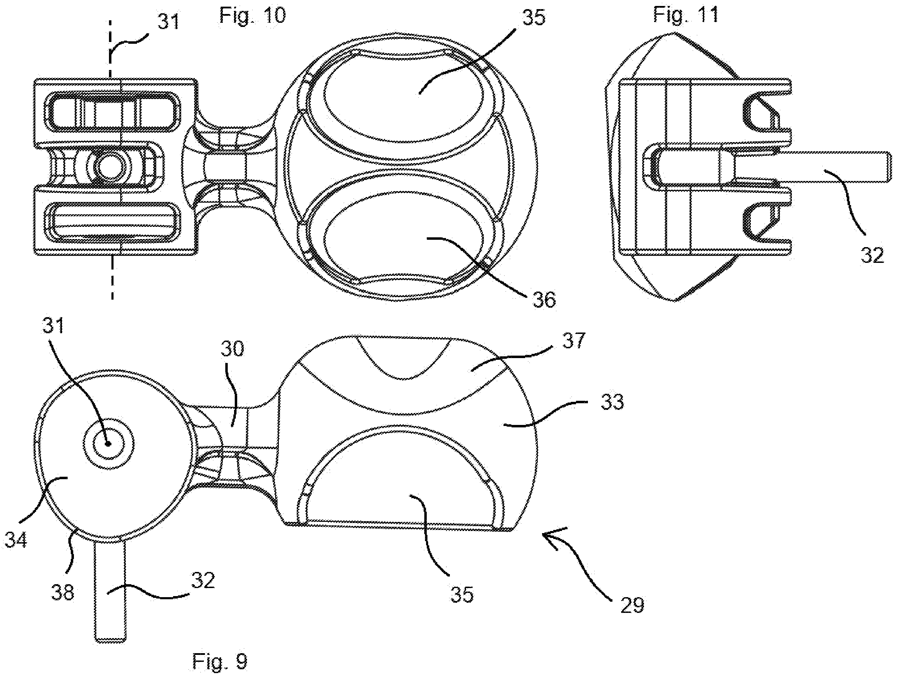

In den Figuren 1 bis 4 ist ein Rollstuhlrad 1 dargestellt, welches um eine Drehachse 2 drehbar ist. Die Drehachse 2 ist eine Gerade. Das Rollstuhlrad ist in Bezug auf die Drehachse 2 ein rotationssymmetrischer Körper. Das Rollstuhlrad 1 weist eine Nabe 3 und einen an der Nabe 3 angeordneten Radkörper auf, der aus drei baugleichen Radkörpersektoren 5, 6, 7 zusammengesetzt ist. An der Nabe 3 sind drei voneinander unabhängige und baugleiche Befestigungseinrichtungen 8, 9, 10 angeordnet. Mit jeder der drei Befestigungseinrichtungen 8, 9, 10 kann genau ein Radkörpersektor 5, 6, 7 an der Nabe 3 befestigt werden. Dabei ist unerheblich, welcher der drei Radkörpersektoren 5, 6, 7 mit welcher der drei Befestigungseinrichtungen 8, 9, 10 an der Nabe 3 befestigt ist. In den Figuren 5 bis 8 ist exemplarisch der Radkörpersektor 5 dargestellt. In den Figuren 9 bis 11 ist exemplarisch die Befestigungseinrichtung 8 dargestellt.

Der Radkörper weist an seiner Umfangsseite einen Reifen 11 auf, der an seiner Außenseite eine Lauffläche 12 des Rollstuhlrades 1 bildet. Mit dieser Lauffläche rollt das Rollstuhlrad auf einem in der Zeichnung nicht dargestellten Untergrund ab. Der Radkörper stellt darüber hinaus die Verbindung zwischen der Nabe 3 und der Lauffläche 12 her.

Die Nabe 3 weist eine erste Nabenscheibe 13 und eine zweite Nabenscheibe 14 auf. Diesen beiden Nabenscheiben 13, 14 sind koaxial zu der Drehachse 2 mit einem Abstand zueinander angeordnet. Die erste Nabenscheibe 13 und die zweite Nabenscheibe 14 begrenzen eine Ringnut, in welche die Radkörpersektoren 5, 6, 7 eingesetzt sind. Die Ringnut bildet damit eine Radkörpersektoraufnahme 15 an der Nabe 3. Die Radkörpersektoren 5, 6, 7 sind mit einem der Nabe 3 zugewandten Befestigungsabschnitt 16 in der Radkörpersektoraufnahme 15 angeordnet. An der zweiten Nabenscheibe 14 sind die drei Befestigungseinrichtungen 8, 9, 10 mit einem Abstand von jeweils 120° angeordnet. Die Nabe 3 ist darüber hinaus mit Kugellagern 17 ausgestattet, in welchen eine Radachse 18 gelagert ist. Über die Radachse 18 ist das Rollstuhlrad 1 mit einem in der Zeichnung nicht dargestellten Rollstuhl verbindbar.

Jeder der drei Radkörpersektoren 5, 6, 7 erstreckt sich über einen Winkel von 120° und stellt einen Abschnitt eines Vollkreises dar. Die Radkörpersektoren 5, 6, 7 weisen ein Felgenprofil 19 und einen in dem Felgenprofil 19 angeordneten Reifenabschnitt 20 auf. Der Reifenabschnitt 20 besteht aus einem elastischen Material, insbesondere aus Vollgummi. Die Reifenabschnitte 20 der drei Radkörpersektoren 5, 6, 7 bilden zusammen den Reifen 11, dessen Lauffläche 12 bis auf die Übergänge zwischen den einzelnen Reifenabschnitten 20 eine geschlossene Fläche ist.

Die Radkörpersektoren 5, 6, 7 sind speichenlos. Sie sind mit einer Scheibe aus carbonfaserverstärktem Kunststoff (CFK) ausgestattet. Sind die drei Radkörpersektoren 5, 6, 7 an der Nabe 3 befestigt, so berühren sich die jeweils benachbarten Radkörpersektoren 5, 6, 7 an ihren Stirnseiten 21, 22. An einer ersten Stirnseite 21 ist jeder Radkörpersektor 5, 6, 7 mit einer Nut 23 und an einer zweiten Stirnseite 22 mit einer über die Stirnseite 22 überstehenden Feder 24 ausgestattet. Mittels der Nut 23 und der Feder 24 bilden die an der Nabe 3 angeordneten Radkörpersektoren 5, 6, 7 untereinander eine Nut-Feder-Verbindung aus.

Jeder der Radkörpersektoren 5, 6, 7 ist mit einem Greifringabschnitt 25 ausgestattet. Sind die drei Radkörpersektoren 5, 6, 7 an der Nabe befestigt, so berühren sich die Greifringabschnitte 25 benachbarter Radkörpersektoren 5, 6, 7, so dass ein geschlossener Greifring des Rollstuhlrades 1 entsteht. Der Greifringabschnitt 25 ist über Greifringstege 26 an dem Radkörpersektor 5, 6, 7 befestigt.

Im Bereich des Befestigungsabschnitts 16 weisen die Radkörpersektoren 5, 6, 7 eine Ausnehmung 27 für eine Befestigungseinrichtung 8, 9, 10 auf. Die Ausnehmung 27 verläuft im wesentlichen radial bezogen auf den Drehachse 2 des Rollstuhlrades 1. Jeder Radkörpersektor ist darüber hinaus mit einer als Mulde ausgebildeten Vertiefung 28 für die Befestigungseinrichtung ausgestattet.

Die drei baugleichen Befestigungseinrichtungen 8, 9, 10 sind als Spanneinrichtung mit Exzenterspanner 29 ausgebildet. Dieser ist in den Figuren 9, 10 und 11 dargestellt. Der Exzenterspanner 29 weist einen Spannhebel 30 auf, der um eine Spannachse 31 drehbar ist. Die Spannachse 31 ist dabei eine Gerade, welche parallel zu einer die Radachse 2 senkrecht schneidenden Geraden verläuft. Die Spannachse 31 ist in Bezug auf die Nabe 3 ortsfest. Sie verändert ihre Position an der Nabe 3 nicht. Der Spannhebel 30 ist an einem Steg 32 drehbar angeordnet. Der Steg ist als Bolzen ausgebildet und erstreckt sich im wesentlichen parallel zur Drehachse 2 des Rollstuhlrades 1. Mit einem Ende ist der Steg 32 an der zweiten Nabenscheibe 14 befestigt. Der Spannhebel 30 weist ein Griffteil 33 und ein Spannteil 34 auf. Das Spannteil 34 weist als äußere Kontur eine Spannkurve auf, deren Mittelpunkt abseits der Spannachse 31 liegt. Hierdurch ist eine Spannnase 38 gebildet. Im Abschnitt der Spannnase 38 weist das Spannteil 34 die größte Ausdehnung in radialer Richtung bezogen auf die Spannachse 31 auf. Das Griffteil 33 ist ergonomisch geformt. Es weist an einer ersten Seite zwei Griffmulden 35, 36 und an einer der ersten Seite abgewandten zweiten Seite eine Auflagefläche 37 für den Handballen auf.

Die Befestigungseinrichtungen 8, 9, 10 weisen eine Öffnungsstellung und eine Schließstellung auf. Bei dem in Figur 1 und 2 dargestellten Rollstuhlrad 1 befinden sich alle drei Befestigungseinrichtungen 8, 9, 10 in Schließstellung. Die drei Radkörpersektoren 5, 6, 7 sind an der Nabe 3 angeordnet und mittels der Befestigungseinrichtungen 8, 9, 10 an der Nabe befestigt. Die Radkörpersektoren 5, 6, 7 sind mit ihren Befestigungsabschnitten 16 in der als Ringnut ausgebildeten Radkörpersektoraufnahme 15 an der Nabe 3 aufgenommen und zwischen der ersten und zweiten Nabenscheibe 13, 14 gehalten. An den Stirnseiten der Radkörpersektoren 5, 6, 7 sind die Radkörpersektoren untereinander durch eine Nut-Feder-Verbindung gehalten. In der Schließstellung liegen die Griffteile 33 der Befestigungseinrichtungen 8, 9, 10 an den Radkörpersektoren 5, 6, 7 an. Die Spannnasen 38 der Exzenterspanner sind in den Vertiefungen 28 der Radkörpersektoren 5, 6, 7 angeordnet und drücken die Radkörpersektoren gegen die zweite Nabenscheibe 14, so dass die zweite Nabenscheibe 14 ein Gegenlager zu dem Exzenterspanner 29 bildet. Jeder Radkörpersektor 5, 6, 7 ist zwischen der zweiten Nabenscheibe 14 und dem Exzenterspanner 29 einer Befestigungseinrichtung 8, 9, 10 eingespannt.

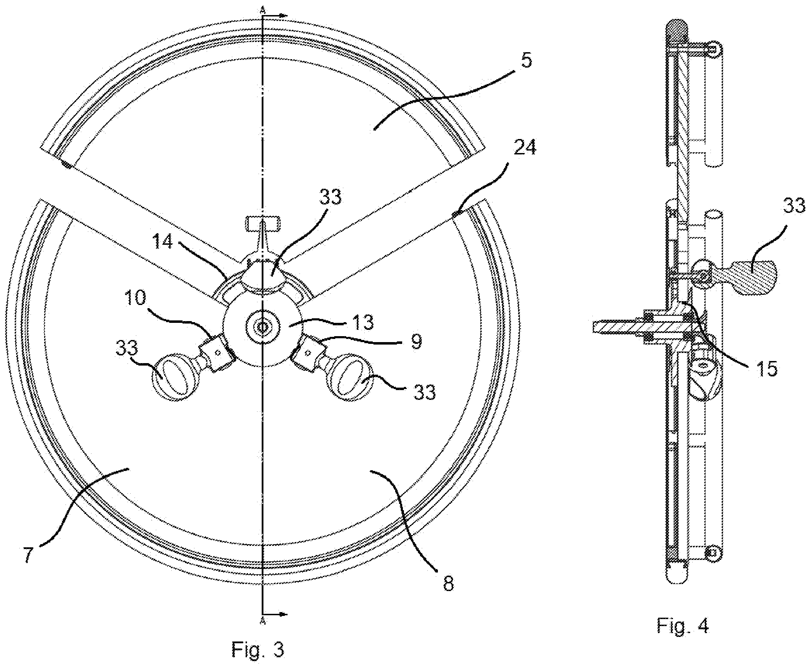

Bei dem Rollstuhlrad 1 gemäß Figuren 3 und 4 befindet sich die Befestigungseinrichtung 8 in der Öffnungsstellung. Der Radkörpersektor 5 ist von der Nabe 3 gelöst und mit Abstand zu dieser sowie zu den beiden anderen Radkörpersektoren 6, 7 angeordnet. Zum Übergang von der Schließstellung in die Öffnungsstellung wird der Spannhebel 30 des Exzenterspanners um die Spannachse 31 gedreht. Dabei geht das Griffteil 33 von einer im wesentlichen an dem Radkörpersektor 5 anliegenden Stellung in eine senkrecht nach außen in Richtung der Radachse 2 abstehende Stellung über. Dies ist besonders gut in Figur 4 erkennbar. Um den Spannhebel 30 mittels des Griffteils 33 von der Schließstellung in die Öffnungsstellung zu bewegen, wird von oben auf die Auflagefläche 37 mit der Hand Druck ausgeübt. Dabei ist für den Benutzer die Zuordnung zwischen der Befestigungseinrichtung 8 und dem Radkörpersektor 5 klar und eindeutig dadurch vorgegeben, dass das Griffteil 33 der Befestigungseinrichtung 8 an dem Radkörpersektor 5 anliegt. Beim Übergang von der Schließstellung in die Öffnungsstellung wird das Spannteil 34 derart relativ zu dem Radkörpersektor 5 bewegt, dass die Spannnase 38 nicht mehr gegen den Radkörpersektor 5 drückt. Nach Wegfall dieser Spannkraft liegt der Radkörpersektor 5 nur noch lose in der Radkörpersektoraufnahme 15 und wird nur noch lose über Nut 23 und Feder 24 an den benachbarten Radkörpersektoren 6, 7 gehalten. Er kann nun ohne großen Kraftaufwand von der Nabe 3 abgenommen werden.

Um den Radkörpersektor 5 anschließend wieder an der Nabe 3 zu befestigen, wird der Radkörpersektor 5 mit seinem Befestigungsabschnitt 16 in die Radkörpersektoraufnahme 15 eingeführt, so dass der Steg 32 der Befestigungseinrichtung 8 in der Ausnehmung 27 des Radkörpersektors 5 zu liegen kommt. In dieser Position des Radkörpersektors 5 berühren seine Stirnseiten die Stirnseiten der benachbarten Radkörpersektoren 6, 7 und gehen mit diesen eine Nut-Feder-Verbindung ein, so dass der Radkörpersektor 5 nun wieder lose an der Nabe 3 gehalten und durch die beiden benachbarten Radkörpersektoren 6, 7 abgestützt ist. Nun wird der Spannhebel 30 der Befestigungseinrichtung 8 mittels des Griffteils 33 in die Schließstellung bewegt. Auch hierbei ist die Zuordnung zwischen dem Griffteil 33 der Befestigungseinrichtung 8 und dem zu befestigenden Radkörpersektor 5 für den Benutzer klar und eindeutig erkennbar, da das Griffteil 33 der Befestigungseinrichtung 8 von der Nabe 3 nach außen absteht, während die Griffteile 33 der beiden anderen Befestigungseinrichtungen 9, 10 an den Radkörpersektoren 6, 7 anliegen. Dies ist besonders gut in den Figuren 3 und 4 erkennbar. Beim Übergang von der Öffnungsstellung in die Schließstellung wird das Spannteil 34 um die Spannachse 31 gedreht, so dass die Spannnase 38 wieder in der Vertiefung 28 des Radkörpersektors 5 zu liegen kommt. Die in der Vertiefung angeordnete Spannnase kann sich nicht von allein aus der Vertiefung lösen. Der Exzenterspanner ist selbsthemmend.

### Bezugszahlen

- 1: Rollstuhlrad
- 2: Drehachse
- 3: Nabe
- 4 5: Radkörpersektor
- 6: Radkörpersektor
- 7: Radkörpersektor
- 8: Befestigungseinrichtung
- 9: Befestigungseinrichtung
- 10: Befestigungseinrichtung
- 11: Reifen
- 12: Lauffläche
- 13: erste Nabenscheibe
- 14: zweite Nabenscheibe
- 15: Radkörpersektoraufnahme
- 16: Befestigungsabschnitt
- 17: Kugellager
- 18: Radachse
- 19: Felgenprofil
- 20: Reifenabschnitt
- 21: erste Stirnseite
- 22: zweite Stirnseite
- 23: Nut
- 24: Feder
- 25: Greifringabschnitt
- 26: Greifringsteg
- 27: Ausnehmung
- 28: Vertiefung
- 29: Exzenterspanner
- 30: Spannhebel
- 31: Spannachse
- 32: Steg
- 33: Griffteil
- 34: Spannteil
- 35: Griffmulde
- 36: Griffmulde
- 37: Auflagefläche
- 38: Spannnase

## Patentansprüche

1. Rollstuhlrad (1),
welches um eine Drehachse (2) drehbar ist,
mit einer Nabe (3), welche mit einer Radachse (18) eines Rollstuhlrahmens verbindbar ist,
mit einem an der Nabe (3) angeordneten, eine Lauffläche (12) des Rollstuhlrades (1) bildenden und die Verbindung zwischen Lauffläche (12) und Nabe (3) darstellenden Radkörper, welcher aus drei Radkörpersektoren (5, 6, 7) zusammengesetzt ist, wobei jeder Radkörpersektor (5, 6, 7) mit einem Felgenprofil (19) und mit einem in dem Felgenprofil (19) angeordneten Reifenabschnitt (20) ausgestattet ist, mit drei voneinander unabhängigen Befestigungseinrichtungen (8, 9, 10), wobei jeder Radkörpersektor (5, 6, 7) mit einer der Befestigungseinrichtungen (8, 9, 10) an der Nabe (3) lösbar befestigt ist.

2. Rollstuhlrad nach Anspruch 1, **dadurch gekennzeichnet, dass** die drei Befestigungseinrichtungen (8, 9, 10) an der Nabe (3) in Bezug auf die Drehachse (2) des Rollstuhlrades (1) radial nach außen versetzt angeordnet sind.

3. Rollstuhlrad nach Anspruch 1 oder 2, **dadurch gekennzeichnet, dass** jede Befestigungseinrichtung (8, 9, 10) ein manuell zu betätigendes Griffteil (33) aufweist, mit dem die Befestigungseinrichtung (8, 9, 10) von einer einen Radkörpersektor (5, 6, 7) an der Nabe (3) fixierenden Schließstellung in eine den Radkörpersektor (5, 6, 7) von der Nabe (3) lösbaren Öffnungsstellung überführt werden kann, und dass das Griffteil (33) an einer Außenseite des Rollstuhlrades (1) im Bereich desjenigen Radkörpersektors (5, 6, 7) angeordnet ist, der mit dieser Befestigungseinrichtung (8, 9, 10) an der Nabe (3) befestigt ist.

4. Rollstuhlrad nach Anspruch 1, 2 oder 3, **dadurch gekennzeichnet, dass** die Nabe (3) an ihrer Außenseite eine als umlaufende Ringnut ausgebildete Radkörpersektoraufnahme (15) aufweist, und dass in der Radkörpersektoraufnahme (15) die Radkörpersektoren (5, 6, 7) mit einem der Nabe (3) zugewandten Befestigungsabschnitt (16) aufgenommen sind.

5. Rollstuhlrad nach Anspruch 4, **dadurch gekennzeichnet, dass** die Radkörpersektoraufnahme (15) durch zwei im wesentlichen zueinander parallele, radial nach außen abstehende, ringförmige Nabenscheiben (13, 14) gebildet ist, welche in axialer Richtung bezogen auf die Drehachse (2) des Rollstuhlrades (1) einen Abstand zueinander aufweisen, der im wesentlichen der Dicke des Befestigungsabschnitts (16) der Radkörpersektoren (5, 6, 7) entspricht.

6. Rollstuhlrad nach einem der vorhergehenden Ansprüche, **dadurch gekennzeichnet, dass** jeder Radkörpersektor (5, 6, 7) an seinen den benachbarten Radkörpersektoren (5, 6, 7) zugewandten Stirnseiten (21, 22) zumindest abschnittsweise mit einem Profil ausgestattet ist, und dass die Profile benachbarter, an der Nabe (3) befestigter Radkörpersektoren (5, 6, 7) ineinandergreifen.

7. Rollstuhlrad nach Anspruch 6, **dadurch gekennzeichnet, dass** das Profil an der einen Stirnseite (21, 22) eines Radkörpersektors (5, 6, 7) als Nut (23) und an der anderen Stirnseite (21, 22) des Radkörpersektors (5, 6, 7) als Feder (24) ausgebildet ist, und dass die an der Nabe (3) befestigten Radkörpersektoren (5, 6, 7) untereinander eine Nut-Feder-Verbindung ausbilden.

8. Rollstuhlrad nach einem der vorhergehenden Ansprüche, **dadurch gekennzeichnet, dass** die Reifenabschnitte (20) aller Radkörpersektoren (5, 6, 7) einen zusammenhängenden Reifen (11) mit einer im wesentlichen umfangsseitig geschlossenen Lauffläche (12) bilden.

9. Rollstuhlrad nach einem der vorhergehenden Ansprüche, **dadurch gekennzeichnet, dass** jeder Radkörpersektor (5, 6, 7) mit einem Greifringabschnitt (25) ausgestattet ist, und dass die Greifringabschnitte (25) aller an der Nabe (3) befestigten Radkörpersektoren (5, 6, 7) einen umlaufenden, geschlossenen Greifring des Rollstuhlrades (1) bilden.

10. Rollstuhlrad nach Anspruch 9, **dadurch gekennzeichnet, dass** die Greifringabschnitte (25) je zweier benachbart an der Nabe (3) befestigter Radkörpersektoren (5, 6, 7) ineinandergreifen.

11. Rollstuhlrad nach einem der vorhergehenden Ansprüche, **dadurch gekennzeichnet, dass** die drei Befestigungseinrichtungen (8, 9, 10) baugleich sind.

12. Rollstuhlrad nach einem der vorhergehenden Ansprüche, **dadurch gekennzeichnet, dass** die Befestigungseinrichtungen (8, 9, 10) als Spanneinrichtung ausgebildet sind, welche die Radkörpersektoren (5, 6, 7) an der Nabe (3) festspannen.

13. Rollstuhlrad nach Anspruch 12, **dadurch gekennzeichnet, dass** jede Befestigungseinrichtung (8, 9, 10) mit einem Exzenterspanner (29) ausgestattet ist.

14. Rollstuhlrad nach Anspruch 13, **dadurch gekennzeichnet, dass** der Exzenterspanner (29) selbsthemmend ist.

15. Rollstuhlrad nach Anspruch 13 oder 14, soweit diese auf Anspruch 3 rückbezogen sind, **dadurch gekennzeichnet, dass** der Exzenterspanner (29) einen Spannhebel (30) aufweist, der um eine an der Nabe (3) feststehende Spannachse (31) drehbar ist, und dass der Spannhebel (30) mit dem Griffteil (33) und mit einem eine Spannkurve aufweisenden Spannteil (34) ausgestattet ist.

16. Rollstuhlrad nach Anspruch 15, **dadurch gekennzeichnet, dass** die Spannachse (31) senkrecht zur Drehachse (2) des Rollstuhlrades (1) verläuft.

17. Rollstuhlrad nach Anspruch 15 oder 16, **dadurch gekennzeichnet, dass** das Spannteil (34) in einer Öffnungsstellung der Befestigungseinrichtung (8, 9, 10) einen Abstand zu einem an der Nabe (3) angeordneten Radkörpersektor (5, 6, 7) aufweist oder kraftlos an diesem anliegt, und dass das Spannteil (34) in einer Schließstellung der Befestigungseinrichtung (8, 9, 10) mit einer durch die Spannkurve vorgegebenen Kraft gegen einen an der Nabe (3) angeordneten Radkörpersektor (5, 6, 7) drückt.

18. Rollstuhlrad nach Anspruch 17, **dadurch gekennzeichnet, dass** an der Nabe (3) ein Gegenlager angeordnet ist, welches in Schließstellung der Befestigungseinrichtung (8, 9, 10) mit dem Spannteil (34) zusammenwirkt, und dass ein Radkörpersektor (5, 6, 7) in Schließstellung der Befestigungseinrichtung (8, 9, 10) zwischen dem Spannteil (34) und dem Gegenlager eingespannt ist.

19. Rollstuhlrad nach Anspruch 18, soweit dieser auf Anspruch 5 rückbezogen ist, **dadurch gekennzeichnet, dass** das Gegenlager durch eine der beiden ringförmigen Nabenscheiben (13, 14) gebildet ist.

20. Rollstuhlrad nach einem der Ansprüche 15 bis 19, **dadurch gekennzeichnet, dass** jeder der Radkörpersektoren (5, 6, 7) eine Vertiefung (28) aufweist, in welcher das Spannteil (34) in der Schließstellung der Befestigungseinrichtung (8, 9, 10) zu liegen kommt.

21. Rollstuhlrad nach einem der Ansprüche 3 bis 20, **dadurch gekennzeichnet, dass** das Griffteil (33) an einer ersten Seite mindestens eine Griffmulde (36) für einen oder mehrere Finger und an einer der ersten Seite abgewandten zweiten Seite eine Auflagefläche für den Handballen einer Person aufweist.

22. Rollstuhlrad nach einem der Ansprüche 3 bis 21, **dadurch gekennzeichnet, dass** das Griffteil (33) in der Schließstellung der Befestigungseinrichtung (8, 9, 10) an demjenigen Radkörpersektor (5, 6, 7) anliegt, der mit dieser Befestigungseinrichtung (8, 9, 10) an der Nabe (3) befestigt ist, und dass der Radkörpersektor (5, 6, 7) dabei einen Anschlag für das Griffteil (33) bildet.

23. Rollstuhlrad nach einem der vorhergehenden Ansprüche, **dadurch gekennzeichnet, dass** jede Befestigungseinrichtung (8, 9, 10) einen an der Nabe (3) angeordneten, parallel zur Drehachse (2) des Rollstuhlrades (1) verlaufenden Steg (32) aufweist, und dass jeder Radkörpersektor (5, 6, 7) an seinem der Nabe (3) zugewandten Befestigungsabschnitt (16) eine Ausnehmung (27) aufweist, in welcher der Steg (32) beim Befestigen des Radkörpersektors (5, 6, 7) an der Nabe (3) zu liegen kommt.

24. Rollstuhlrad nach Anspruch 23, soweit dieser auf Anspruch 15 rückbezogen ist, **dadurch gekennzeichnet, dass** der Spannhebel (30) des Exzenterspanners (29) drehbar an dem Steg (32) angeordnet ist.

## Claims

1. Wheelchair wheel (1),
which is rotatable around an axis of rotation (2),
with a hub (3), which is connectable to a wheel axle (18) of a wheelchair frame,
with a wheel body arranged on the hub (3), forming a running surface (12) of the wheelchair wheel (1) and constituting the connection between the running surface (12) and the hub (3), said wheel body being composed of three wheel body sectors (5, 6, 7), each wheel body sector (5, 6, 7) is provided with a rim profile (19) and a tyre section (20) arranged in the rim profile (19),
with three fastening devices (8, 9, 10) which are independent of one another, wherein each wheel body sector (5, 6, 7) being releasably fastened to the hub (3) by one of the fastening devices (8, 9, 10).

2. Wheelchair wheel according to claim 1, **characterised in that** the three fastening devices (8, 9, 10) are arranged on the hub (3) in a way offset radially outwards in relation to the axis of rotation (2) of the wheelchair wheel (1).

3. Wheelchair wheel according to claim 1 or 2, **characterised in that** each fastening device (8, 9, 10) has a manually operated handle piece (33) with which the fastening device (8, 9, 10) is movable from a closed position securing a wheel body sector (5, 6, 7) to the hub (3) into an open position releasing the wheel body sector (5, 6, 7) from the hub (3), and that the handle piece (33) is arranged on an outer side of the wheelchair wheel (1) in the area of that wheel body sector (5, 6, 7) which is secured to the hub (3) by this fastening device (8, 9, 10).

4. Wheelchair wheel according to claim 1, 2 or 3, **characterised in that** the hub (3) has a wheel body sector seat (15) in the form of a circumferential annular groove on its outside, and that the wheel body sectors (5, 6, 7) are seated in the wheel body sector seat (15) with a fastening section (16) facing the hub (3).

5. Wheelchair wheel according to claim 4, **characterised in that** the wheel body sector seat (15) is formed by two annular hub discs (13, 14), which are substantially parallel to one another, project radially outwards and are spaced apart from one another in the axial direction relative to the axis of rotation (2) of the wheelchair wheel (1) by a distance which substantially corresponds to the thickness of the fastening section (16) of the wheel body sectors (5, 6, 7).

6. Wheelchair wheel according to one of the previous claims, **characterised in that** each wheel body sector (5, 6, 7) is provided with a profile at least in sections on its end faces (21, 22) facing the adjacent wheel body sectors (5, 6, 7), and **in that** the profiles of adjacent wheel body sectors (5, 6, 7) fastened to the hub (3) interlock.

7. Wheelchair wheel according to claim 6, **characterised in that** the profile is formed as a groove (23) on one end face (21, 22) of a wheel body sector (5, 6, 7) and as a tongue (24) on the other end face (21, 22) of the wheel body sector (5, 6, 7), and **in that** the wheel body sectors (5, 6, 7) fastened to the hub (3) form a tongue-and-groove connection between one another.

8. Wheelchair wheel according to one of the previous claims, **characterised in that** the tyre sections (20) of all wheel body sector (5, 6, 7) form a continuous tyre (11) with a substantially circumferentially closed running surface (12).

9. Wheelchair wheel according to one of the previous claims, **characterised in that** each wheel body sector (5, 6, 7) is provided with a gripping ring section (25), and that the gripping ring sections (25) of all wheel body sectors (5, 6, 7) fastened to the hub (3) form a circumferential, closed gripping ring of the wheelchair wheel (1).

10. Wheelchair wheel according to claim 9, **characterised in that** the gripping ring sections (25) of each two wheel body sectors (5, 6, 7) attached adjacent to each other on the hub (3) interlock.

11. Wheelchair wheel according to one of the previous claims, **characterised in that** the three fastening devices (8, 9, 10) are of identical construction.

12. Wheelchair wheel according to one of the previous claims, **characterised in that** the fastening devices (8, 9, 10) are designed as clamping devices which clamp the wheel body sectors (5, 6, 7) to the hub (3).

13. Wheelchair wheel according to claim 12, **characterised in that** each fastening device (8, 9, 10) is provided with an eccentric tensioner (29).

14. Wheelchair wheel according to claim 13, **characterised in that** the eccentric tensioner (29) is self-locking.

15. Wheelchair wheel according to claim 13 or 14, insofar as these are referred back to claim 3, **characterised in that** the eccentric tensioner (29) has a tensioning lever (30) which is rotatable about a tensioning axle (31) fixed to the hub (3), and **in that** the tensioning lever (30) is provided with the handle piece (33) and with a tensioning part (34) having a tensioning cam.

16. Wheelchair wheel according to claim 15, **characterised in that** the tensioning axle (31) runs perpendicular to the axis of rotation (2) of the wheelchair wheel (1).

17. Wheelchair wheel according to claim 15 or 16, **characterised in that**, in an open position of the fastening device (8, 9, 10), the tensioning part (34) is at a distance from a wheel body sector (5, 6, 7) arranged on the hub (3) or bears against the latter without force, and **in that**, in a closed position of the fastening device (8, 9, 10), the tensioning part (34) presses against a wheel body sector (5, 6, 7) arranged on the hub (3) with a force predetermined by the clamping cam.

18. Wheelchair wheel according to claim 17, **characterised in that** a counter-bearing is arranged on the hub (3) which interacts with the tensioning part (34) in the closed position of the fastening device (8, 9, 10), and **in that** a wheel body sector (5, 6, 7) is clamped between the tensioning part (34) and the counter-bearing in the closed position of the fastening device (8, 9, 10).

19. Wheelchair wheel according to claim 18, insofar as this is referred back to claim 5, **characterised in that** the counter-bearing is formed by one of the two annular hub discs (13, 14).

20. Wheelchair wheel according to one of the claims 15 to 19, **characterised in that** each of the wheel body sectors (5, 6, 7) has a recess (28) in which the tensioning part (34) comes to rest in the closed position of the fastening device (8, 9, 10).

21. Wheelchair wheel according to one of the claims 3 to 20, **characterised in that** the handle piece (33) has on a first side at least one recesses grip (36) for one or more fingers and on a second side facing away from the first side a support surface for a ball of a person's hand.

22. Wheelchair wheel according to one of the claims 3 to 21, **characterised in that** in the closed position of the fastening device (8, 9, 10), the handle piece (33) rests against that wheel body sector (5, 6, 7) which is fastened to the hub (3) by this fastening device (8, 9, 10), and **in that** the wheel body sector (5, 6, 7) thereby forms a stop for the handle piece (33).

23. Wheelchair wheel according to one of the previous claims, **characterised in that** each fastening device (8, 9, 10) has a web (32) which is arranged on the hub (3) and runs parallel to the axis of rotation (2) of the wheelchair wheel (1), and **in that** each wheel body sector (5, 6, 7) has a recess (27) on its fastening section (16) facing the hub (3), in which recess the web (32) comes to rest when the wheel body sector (5, 6, 7) is fastened to the hub (3).

24. Wheelchair wheel according to claim 23, insofar as this is referred back to claim 15, **characterised in that** the tensioning lever (30) of the eccentric tensioner (29) is arranged rotatably on the web (32).

## Revendications

1. Roue de fauteuil roulant (1),
pouvant tourner autour d'un axe de rotation (2),
avec un moyeu (3) pouvant être relié à un axe de roue (18) d'un châssis de fauteuil roulant,
avec un corps de roue disposé sur le moyeu (3), formant une bande de roulement (12) de la roue de fauteuil roulant (1) et constituant la liaison entre la bande de roulement (12) et le moyeu (3), ledit corps de roue étant composé de trois secteurs de corps de roue (5, 6, 7), chaque secteur de corps de roue (5, 6, 7) étant doté d'un profil de jante (19) et d'un segment de bandage (20) disposé dans le profil de jante (19),
avec trois dispositifs de fixation (8, 9, 10) indépendants les uns des autres, chaque secteur de corps de roue (5, 6, 7) étant fixé de manière amovible au moyeu (3) par un des dispositifs de fixation (8, 9, 10).

2. Roue de fauteuil roulant selon la revendication 1, **caractérisée en ce que** les trois dispositifs de fixation (8, 9, 10) sont disposés au niveau du moyeu (3) de manière décalée radialement vers l'extérieur par rapport à l'axe de rotation (2) de la roue de fauteuil roulant (1).

3. Roue de fauteuil roulant selon la revendication 1 ou 2, **caractérisée en ce que** chaque dispositif de fixation (8, 9, 10) présente une poignée (33) à actionnement manuel permettant de faire passer ledit dispositif de fixation (8, 9, 10) d'une position fermée fixant un secteur de corps de roue (5, 6, 7) au moyeu (3) à une position ouverte détachant le secteur de corps de roue (5, 6, 7) du moyeu (3), et **en ce que** ladite poignée (33) est disposée sur une face extérieure de la roue de fauteuil roulant (1) au niveau du secteur de corps de roue (5, 6, 7) qui est fixé au moyeu (3) par ledit dispositif de fixation (8, 9, 10).

4. Roue de fauteuil roulant selon la revendication 1, 2 ou 3, **caractérisée en ce que** le moyeu (3) présente, sur sa face extérieure, un logement de secteur de corps de roue (15) réalisé sous la forme d'une rainure annulaire périphérique, et **en ce que** les secteurs de corps de roue (5, 6, 7) sont logés dans ledit logement de secteur de corps de roue (15) au moyen d'une partie de fixation (16) orientée vers le moyeu (3).

5. Roue de fauteuil roulant selon la revendication 4, **caractérisée en ce que** le logement de secteur de corps de roue (15) est formé par deux disques de moyeu annulaires (13, 14) essentiellement parallèles l'un à l'autre et faisant saillie radialement vers l'extérieur, lesdits disques de moyeu étant écartés l'un de l'autre en direction axiale par rapport à l'axe de rotation (2) de la roue de fauteuil roulant (1), ledit écart correspondant essentiellement à l'épaisseur de la partie de fixation (16) des secteurs de corps de roue (5, 6, 7).

6. Roue de fauteuil roulant selon l'une quelconque des revendications précédentes, **caractérisée en ce que** chaque secteur de corps de roue (5, 6, 7) est doté, au moins en partie, d'un profil sur ses chants (21, 22) orientés vers les secteurs de corps de roue (5, 6, 7) voisins, et **en ce que** lesdits profils des secteurs de corps de roue (5, 6, 7) voisins fixés au moyeu (3) s'imbriquent les uns dans les autres.

7. Roue de fauteuil roulant selon la revendication 6, **caractérisée en ce que** le profil d'un chant (21, 22) d'un secteur de corps de roue (5, 6, 7) est réalisé sous la forme d'une rainure (23) et que celui de l'autre chant (21, 22) du secteur de corps de roue (5, 6, 7) est réalisé sous la forme d'une clavette (24), et **en ce que** les secteurs de corps de roue (5, 6, 7) fixés au moyeu (3) forment ensemble une liaison par rainure et clavette.

8. Roue de fauteuil roulant selon l'une quelconque des revendications précédentes, **caractérisée en ce que** les segments de bandage (20) de tous les secteurs de corps de roue (5, 6, 7) forment un bandage continu (11) avec une bande de roulement (12) essentiellement fermée sur sa circonférence.

9. Roue de fauteuil roulant selon l'une quelconque des revendications précédentes, **caractérisée en ce que** chaque secteur de corps de roue (5, 6, 7) est doté d'un segment de main courante (25) et **en ce que** lesdits segments de main courante (25) de tous les secteurs de corps de roue (5, 6, 7) fixés au moyeu (3) forment une main courante fermée circulaire de la roue de fauteuil roulant (1).

10. Roue de fauteuil roulant selon la revendication 9, **caractérisée en ce que** les segments de main courante (25) de respectivement deux secteurs de corps de roue (5, 6, 7) voisins fixés au moyeu (3) s'emboîtent l'un dans l'autre.

11. Roue de fauteuil roulant selon l'une quelconque des revendications précédentes, **caractérisée en ce que** les trois dispositifs de fixation (8, 9, 10) sont de conception identique.

12. Roue de fauteuil roulant selon l'une quelconque des revendications précédentes, **caractérisée en ce que** les dispositifs de fixation (8, 9, 10) sont réalisés sous la forme de dispositifs de serrage qui fixent les secteurs de corps de roue (5, 6, 7) par serrage sur le moyeu (3).

13. Roue de fauteuil roulant selon la revendication 12, **caractérisée en ce que** chaque dispositif de fixation (8, 9, 10) est doté d'un dispositif de serrage excentrique (29).

14. Roue de fauteuil roulant selon la revendication 13, **caractérisée en ce que** le dispositif de serrage excentrique (29) est autobloquant.

15. Roue de fauteuil roulant selon la revendication 13 ou 14 dans la mesure où celles-ci font référence à la revendication 3, **caractérisée en ce que** le dispositif de serrage excentrique (29) présente un levier de serrage (30) pouvant tourner autour d'un axe de serrage fixe (31) sur le moyeu (3), et **en ce que** ledit levier de serrage (30) est doté d'une poignée (33) et d'un élément de serrage (34) présentant une came de serrage.

16. Roue de fauteuil roulant selon la revendication 15, **caractérisée en ce que** l'axe de serrage (31) est perpendiculaire à l'axe de rotation (2) de la roue de fauteuil roulant (1).

17. Roue de fauteuil roulant selon la revendication 15 ou 16, **caractérisée en ce que** l'élément de serrage (34) présente, dans une position ouverte du dispositif de fixation (8, 9, 10), un écart par rapport à un secteur de corps de roue (5, 6, 7) disposé sur le moyeu (3) ou repose sans force contre ledit secteur de corps de roue, et **en ce que** ledit élément de serrage (34), dans une position fermée du dispositif de fixation (8, 9, 10), exerce une force définie par ladite came de serrage sur un secteur de corps de roue (5, 6, 7) disposé sur le moyeu (3).

18. Roue de fauteuil roulant selon la revendication 17, **caractérisée en ce qu'**un contre-appui est disposé sur le moyeu (3), ledit contre-appui interagissant avec l'élément de serrage (34) en position fermée du dispositif de fixation (8, 9, 10), et **en ce qu'**un secteur de corps de roue (5, 6, 7) est serré entre l'élément de serrage (34) et ledit contre-appui en position fermée du dispositif de fixation (8, 9, 10).

19. Roue de fauteuil roulant selon la revendication 18, dans la mesure où celle-ci fait référence à la revendication 5, **caractérisée en ce que** le contre-appui est formé par un des deux disques de moyeu annulaires (13, 14).

20. Roue de fauteuil roulant selon l'une quelconque des revendications 15 à 19, **caractérisée en ce que** chacun des secteurs de corps de roue (5, 6, 7) présente un creux (28) dans lequel l'élément de serrage (34) repose en position fermée du dispositif de fixation (8, 9, 10).

21. Roue de fauteuil roulant selon l'une quelconque des revendications 3 à 20, **caractérisée en ce que** la poignée (33) présente, d'un premier côté, au moins une partie concave (36) pour un ou plusieurs doigts et, d'un deuxième côté opposé au premier côté, une surface d'appui pour la paume de la main d'une personne.

22. Roue de fauteuil roulant selon l'une quelconque des revendications 3 à 21, **caractérisée en ce que** la poignée (33), en position fermée du dispositif de fixation (8, 9, 10), repose contre le secteur de corps de roue (5, 6, 7) qui est fixé au moyeu (3) par ledit dispositif de fixation (8, 9, 10), et **en ce que** ledit secteur de corps de roue (5, 6, 7) forme alors une butée pour la poignée (33).

23. Roue de fauteuil roulant selon l'une quelconque des revendications précédente, **caractérisée en ce que** chaque dispositif de fixation (8, 9, 10) présente une tige (32) disposée au niveau du moyeu (3) et parallèle à l'axe de rotation (2) de la roue de fauteuil roulant (1), et **en ce que** chaque secteur de corps de roue (5, 6, 7) présente, dans sa partie de fixation (16) orientée vers le moyeu (3), un évidement (27) dans lequel la tige (32) repose lors de la fixation du secteur de corps de roue (5, 6, 7) au moyeu (3).

24. Roue de fauteuil roulant selon la revendication 23, dans la mesure où celle-ci fait référence à la revendication 15, **caractérisée en ce que** le levier de serrage (30) du dispositif de serrage excentrique (29) est disposé de manière à pouvoir tourner au niveau de la tige (32).
